# EUROPEAN PATENT APPLICATION

(11) **EP 4 406 774 A1**
(43) Date of publication of application: **31.07.2024**
(21) Application number: 24154194.5
(22) Date of filing: 26.01.2024
(51) Int. Cl.: B60L 53/16, B60L 53/30, B60L 53/35, B60L 53/67, B60L 53/68

(54) **RAIL MOBILE ELECTRIC VEHICLE CHARGING SYSTEM**

(30) Priority: 27.01.2023 KR 20230010592; 30.03.2023 KR 20230041739
(71) Applicant: Green Power Co., Ltd., Hwaseong-si, Gyeonggi-do 18487 (KR)
(72) Inventor: Cho, Jung goo, Suwon-si, Gyeonggi-do (KR)
(74) Representative: Schön, Christoph

(57) **Abstract**

The present invention relates to a rail mobile electric vehicle charging system, and more particularly, to a rail mobile electric vehicle charging system capable of charging an electric vehicle by moving an electric vehicle charger to a certain position through a method of moving a plurality of electric vehicle chargers to a predetermined charge spot using a moving unit that moves along a rail and connecting an input port of the electric vehicle charger to a power terminal provided at the charge spot, so that there is no need to designate a dedicated parking lot for electric vehicle charging, and there are no problems with charging the electric vehicle even if electric vehicles and regular engine vehicles are parked without distinction, and there is no need to move the electric vehicle to another space even after charging is completed, thereby maximizing the convenience of charging and providing fire monitoring and fire extinguishing functions.

## Description

### [Technical field]

The present invention relates to an electric vehicle charging system, and more particularly, to a rail mobile electric vehicle charging system capable of charging multiple electric vehicles through an electric vehicle charger that may move along a rail.

### [Background Art]

The content described below simply provides background information related to the present embodiment and does not constitute prior art.

Recently, the electric vehicle market using batteries has grown rapidly for the purpose of drastically reducing fossil energy due to a change in climate caused by pollution caused by fossil fuels.

Accordingly, the electric vehicle charger market has also grown rapidly, and the installation of electric vehicle chargers in building parking lots has also spread. However, currently, in order to install an electric vehicle charger in an existing communal parking lot, the consent of residents who mostly use regular vehicles should be obtained and the space and the number of charges are also limited, although it is mandatory for new apartments. In the case of charging an electric vehicle in a dedicated space for electric vehicle charging, the electric vehicle should be quickly removed when charging is completed. Otherwise, users may have to pay fines, which is very stressful.

Recently, in order to overcome the limitations of installing electric vehicle chargers of the related art, a mobile electric vehicle charging system which allows charging parked electric vehicles by installing a movable charger on the ceiling of a parking lot has been developed. The mobile electric vehicle charger is provided in plurality and configured to move forward or backward along a rail, and thus, the mobile electric vehicle charger may move to a place where an electric vehicle is parked to charge the electric vehicle efficiently, thereby advantageously eliminating the need for a dedicated charging space (parking surface).

However, in the case of the mobile electric vehicle charging system, since a plurality of mobile electric vehicle chargers are implemented to be movable along one guide rail, when any one charger is charging a specific electric vehicle, other chargers cannot pass over the charger in operation, and thus, as the number of mobile chargers increases, there are bound to be many restrictions on their use. In addition, since other people cannot unplug a rechargeable gun once charging is completed, the inconvenience that a user has to directly come and unplug the rechargeable gun remains. In addition, all mobile chargers require a driving unit, which increases the cost of the charger.

### [Disclosure]

### [Technical Problem]

In general, in the case of the mobile electric vehicle charging system of the related art, since a plurality of mobile electric vehicle chargers are implemented to be movable along one guide rail, when one electric vehicle charger is charging, another electric vehicle charger cannot pass over, thereby limiting the use, and since all the mobile charges require a driving unit, the cost of the charger increases. In addition, there is an inconvenience of having to remove the electric vehicle when charging is complete.

Another aspect of the present invention may provide a rail mobile electric vehicle charging system including a plurality of electric vehicle chargers that may move along a rail and may be implemented so that another charger may pass over a specific charger which is charging, adopting a method of moving the electric vehicle chargers through a separate moving unit to thereby eliminate a driving unit from the mobile electric vehicle chargers, and establishing an environment in which someone else may remove a charge gun when charging is completed so that a user does not need to immediately pull out a vehicle even after charging is completed.

### [Technical Solution]

In one general aspect, a rail mobile electric vehicle charging system includes: an AC/DC converter receiving AC power and generating DC power; an electric vehicle charger including an electric vehicle charge module receiving the DC power and supplying current necessary for charging an electric vehicle, and a charge cable and a charge gun connected to an input port provided at an input terminal of the electric vehicle charge module and an output terminal of the electric vehicle charge module; a plurality of predetermined charge spots in which a plurality of the electric vehicle chargers are mounted; a power terminal provided at each charge spot and connected to the input port in a contact manner to supply the DC power; a connection unit connecting the AC/DC converter and the power terminal or to another power terminal adjacent to the power terminal; a moving unit moving along a predetermined rail, moving the electric vehicle charger to one of the charge spots, and mounting the electric vehicle charger so that the input terminal of the electric vehicle charger and the power terminal are connected to each other; a system controller controlling the entire system; and a remote server device receiving a charge request through a user terminal, issuing a charge command to the system controller, and monitoring a charge status through the system controller.

In addition, in the present invention, the rail is disposed to be spaced apart from the charge spot by a predetermined distance to prevent physical interference between the electric vehicle charger already mounted on the charge spot and the moving unit for moving another electric vehicle charger.

In addition, in the present invention, the electric vehicle charger includes a camera to monitor an electric vehicle through video during charging or after charging is completed, thereby making it possible to determine who is responsible for damage to the vehicle, etc., thereby creating an environment where someone else may unplug the charge gun, and thus, the user of the electric vehicle charger does not have to take out the vehicle immediately after charging is completed.

In addition, in the present invention, the electric vehicle charger and the moving unit include a thermal imaging camera to additionally provide a function of monitoring fire in the electric vehicle while parked or charging, transmitting a fire alarm when a fire occurs, so that the moving unit may move a fire extinguisher to a position of the electric vehicle where the fire occurred and spray a fire extinguishing liquid to extinguish the fire.

### [Advantageous Effects]

In the case of the rail mobile electric vehicle charging system according to the present invention, the electric vehicle charger moving along the rail may be moved to an arbitrary position for charging, so there is no need to designate a parking lot exclusively for electric vehicle charging, and even when an electric vehicle and a regular vehicle are parked without distinction, there is no problem at all with charging the electric vehicle, and there is no need to move the electric vehicle to another space even after charging is completed, which has the effect of maximizing the convenience of charging.

In addition, an electric vehicle fire that may occur during parking or charging may be monitored using the thermal imaging camera, and when a fire occurs or signs of a fire are visible, a fire alarm may be sent and a fire extinguisher may be moved directly to the moving unit to extinguish the fire in the electric vehicle.

### [BRIEF DESCRIPTION OF THE DRAWINGS]

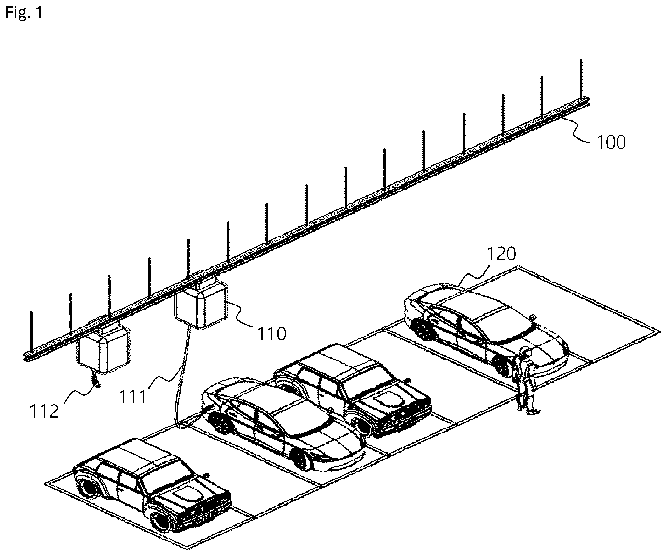

FIG. 1 is a block diagram illustrating the overall configuration of a photovoltaic power generation system without an electric shock according to the present invention.
FIG. 1 is a configuration diagram of a mobile electric vehicle charging system of the related art.
FIG. 2 is a configuration diagram of a rail mobile electric vehicle charging system according to the present invention.
FIG. 3 is a diagram illustrating a method of mounting an electric vehicle charger to a charge spot according to the present invention.
FIG. 4 is a diagram illustrating a method of connecting a power terminal on a charge spot and an input terminal of an electric vehicle charger according to the present invention.
FIG. 5 is a diagram illustrating a method of operating a rail mobile electric vehicle charging system according to the present invention.
FIG. 6 is a diagram illustrating a method of monitoring an electric vehicle that is being charged or has been fully charged according to the present invention.
FIG. 7 is an example diagram illustrating a method of clarifying who is responsible for an accident when a charge gun is separated through someone else according to the present invention.
FIG. 8 is a diagram illustrating a charging method using a plurality of reel-type charge cables according to another embodiment of the present invention.
FIGS. 9 and 10 are diagrams illustrating a method of mounting an electric vehicle charger on a moving unit according to another embodiment of the present invention.
FIG. 11 is a diagram illustrating a method of operating a rail mobile electric vehicle charging system according to an arrangement form of a charge spot according to another embodiment of the present invention.
FIG. 12 is a diagram illustrating a method of operating a rail mobile electric vehicle charging system according to an arrangement form of charge spots according to another embodiment of the present invention.
FIG. 13 is a diagram illustrating a fire monitoring method in a rail mobile electric vehicle charging system according to the present invention.
FIG. 14 is a diagram illustrating a fire extinguishing method in a rail mobile electric vehicle charging system according to the present invention.
FIG. 15 is a diagram illustrating an internal structure of an electric vehicle charger for reel winding driving.

### [Best Mode]

An embodiment of the present invention will be described in detail with reference to the accompanying drawings. The following detailed description is merely illustrative and merely illustrates embodiments of the present invention.

FIG. 1 is a configuration diagram of a mobile electric vehicle charging system of the related art.

Referring to FIG. 1, in the mobile electric vehicle charging system of the related art, a rail 100 is installed along the ceiling of a parking space, and a charger 110 is configured to move along the corresponding rail 100 to charge an electric vehicle 120 parked in a specific parking space.

The rail 100 is mainly installed on the ceiling of the parking space, and the charger 110 moves along the rail using a traveling driving device for traveling.

The charger 110 moves along the rail 100, stops at a parking surface where charging is desired, and performs a function of supplying electricity to the parked electric vehicle 120. A plurality of chargers 110 may be installed depending on the size of the parking space, and each of the plurality of chargers 110 is implemented to be movable along one rail 100.

The charger 110 may be configured to include a charging member including a reel-type charge cable 111 to which a charge gun 112 is attached, and a user of the electric vehicle may pull the reel-type charge cable 111 to move the charge gun to be close to an inlet position and couple the charge gun to an inlet of the electric vehicle to perform charging on the electric vehicle 120.

The mobile electric vehicle charging system of the related art may advantageously solve the problem of space limitations compared to a case in which the electric vehicle charger is implemented as a fixed type. In fact, referring to FIG. 1, the mobile electric vehicle charging system moves to the parking surface in which the electric vehicle is parked and charges it, so there is no need for a dedicated space for charging the electric vehicle, and therefore, electric vehicles and regular vehicles may be parked without distinction.

However, the mobile electric vehicle charging system of the related art has no problem when operating one electric vehicle charger on one rail, but in the case of operating multiple electric vehicle chargers on one rail, when one electric vehicle charger is charging, another mobile electric vehicle charger cannot pass over the electric vehicle charger which is charging, and thus, multiple mobile chargers cannot be operated efficiently.

In addition, when an electric vehicle is fully charged, the charge gun should be removed to be able to charge another electric vehicle, and thus, the user of the charger should remove the charge gun from his/her electric vehicle when a call is received upon completion of charging, having the same disadvantages of the existing fixed type chargers as it is.

In order to overcome the limitations of the mobile electric vehicle charging system of the related art as described above, the present invention proposes a rail mobile electric vehicle charging system having a new structure in which there is no need to designate a parking lot exclusively for charging electric vehicles, there is no problem in charging electric vehicles even when electric vehicles and regular vehicles are parked without distinction, and there is no need to move the electric vehicle to another space even after completion of charging, thereby maximizing the convenience of charging.

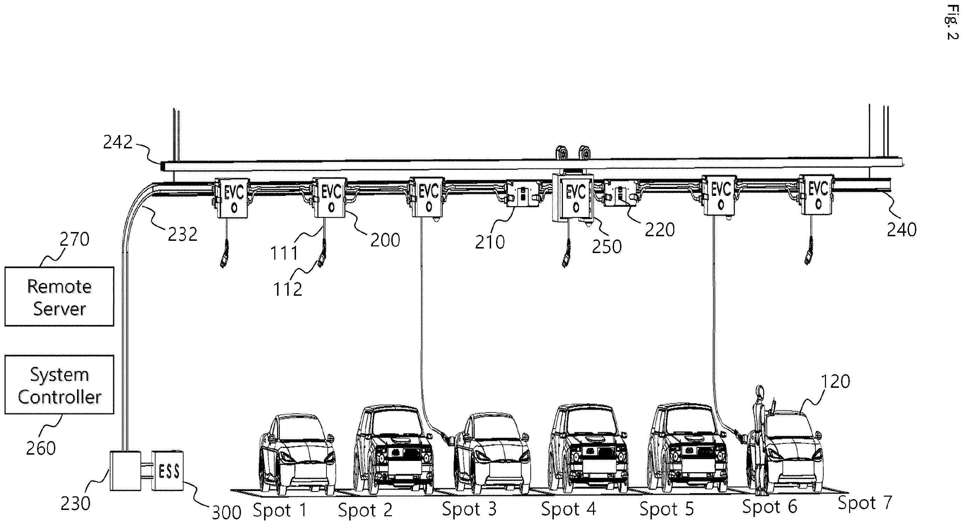

FIG. 2 is a configuration diagram of a rail mobile electric vehicle charging system according to the present invention. The rail mobile electric vehicle charging system according to the present invention includes a plurality of electric vehicle chargers 200, a plurality of charge spots 210, a power terminal 220 provided at each charge spot, an AC/DC converter 230, a connection unit 232 connecting an output terminal of the AC/DC converter 230 and a power terminal or another power terminal adjacent to the power terminal, a moving unit 250, a system controller 260, and a remote server device 270.

The electric vehicle charger 200 includes an electric vehicle charger module that receives DC power from the AC/DC converter 230 and supplies current required for charging the electric vehicle, and a charge cable 111 and a charge gun 112 connected to an input port provided at an input terminal of the electric vehicle charge module and an output terminal of the electric vehicle charge module.

The charge cable 111 may extend and contract in length during movement and charging and may be configured in various forms, such as a reel-type charge cable or a hanger-type in which one or more points of the cable are supported with an elastic member and mounted on the electric vehicle charger 200. Hereinafter, the case in which the charge cable 111 is a reel type will be described as an example.

The electric vehicle charge module forms a charger housing in which the reel-type charge cable 111 is accommodated and moved, and provides power for charging upon receiving DC input power through an input port.

The reel-type charge cable 111 is configured to be wound on a winding reel. At this time, the winding reel is configured to be rotatable on a reel bracket and is driven to rotate in both directions by a driving unit, through which the charge cable may be wound or unwound.

The reel-type charge cable 111 may be implemented as a manual type in which the reel-type charge cable is manually unwound and lowered by the user or as an automatic type in which the reel-type charge cable is automatically unwound and lowered by a separately provided driving unit.

In the case of the manual type, an electric vehicle charger may be mounted on a power terminal, and when the power terminal is connected to the input port of the electric vehicle charger, the user of the electric vehicle may pull the reel-type charge cable 111 wound on the electric vehicle charger to move the charge gun to be close to an inlet position of the electric vehicle and couple the charge gun to the inlet of the electric vehicle, thereby charging the electric vehicle 120.

In the case of the automatic type, the reel-type charge cable 111 may be implemented in a way that it is automatically unwound and lowered by a separately provided driving unit. In this case, the reel-type charge cable 111 is preferably automatically lowered to a vehicle height of the electric vehicle and may be operated manually by the user thereafter. The reel-type charge cable may be implemented to be automatically lowered when charging start information is received from a user terminal and to be automatically raised when the charge gun is pulled out after charging is completed.

In the present invention, unlike the mobile charger 110 of the related art that moves directly along a rail, the electric vehicle charger 200 is moved by the moving unit 250 and moved to a parking position of the electric vehicle 120 to be charged. More specifically, the electric vehicle charger 200 is moved to a predetermined charge spot by the moving unit 250 and mounted on a charge spot, and thereafter, the input port is connected to the power terminal provided in the charge spot to receive power, thereby performing a charging function.

The electric vehicle charger 200 may include an initial charging circuit (not shown) at the input terminal to block spark occurrence when mounted on a contact terminal. At this time, the initial charging circuit may include a series switch and an auxiliary switch connected in series with an initial charging resistor at the input terminal of the electric vehicle charger.

A plurality of electric vehicle chargers 200 may be provided, and according to embodiments, the plurality of electric vehicle chargers may have different charging capacities for each individual or group. For example, a plurality of electric vehicle chargers may be provided with different capacities in 2 to 5 levels so that the user may select one for charging. Meanwhile, in the present invention, the capacity applied to a plurality of electric vehicle chargers is not limited to a specific capacity.

Meanwhile, in the case of the present invention, in order to enable charging of electric vehicles through a plurality of electric vehicle chargers 200 more efficiently, the sum of the capacities of the plurality of electric vehicle chargers may have a significant value compared to the capacity of the AC/DC converter 230. For example, it is desirable that the total capacity of a plurality of electric vehicle chargers is implemented to have a capacity of about 1.3 to 2 times that of the AC/DC converter 230, but is not limited thereto.

In the present invention, the rail mobile electric vehicle charging system performs charging with spare power within a range that does not exceed contracted power of consumers and performs charging according to charging priorities of users. For example, in a case in which contracted power for an apartment in which the rail mobile electric vehicle charging system is currently installed is 1,000 kW and current power usage for the apartment is 850 kW, the rail mobile electric vehicle charging system may set the spare power of 150 kW as a limit usage power for all electric vehicle chargers and divided and used according to preset priorities. This may be flexibly changed in response to a change in spare power.

The rail mobile electric vehicle charging system according to the present invention may be configured to additionally include an energy storage system (ESS) 300 at the output terminal of the AC/DC converter 230.

The ESS 300 may be charged with power late at night or a lot of spare power and then discharge energy when there is a lot of charging demand to cover the charging demand.

The charge spot 210 is configured to mount a plurality of electric vehicle chargers and includes the power terminal 220 that is contact-connected to the input port of the electric vehicle charger.

A plurality of charge spots 210 may be arranged in predetermined positions, where the predetermined position may be a position corresponding to a parking space where an electric vehicle is parked for charging. More preferably, the charge spot 210 may be provided in an upper space of the vehicle between a parking surface and a parking surface. This has the effect of enabling charging without problems, such as cable twisting, regardless of whether the inlet of the electric vehicle to be charged is located on the left or right side relative to the reel-type charge cable of the electric vehicle charger.

The charge spot 210 may preferably be disposed on the ceiling. For example, the charge spot 210 according to the present invention may be implemented as a structure disposed on the ceiling through a fixing fixture 240 fixed to the ceiling by an electric bolt. This fixing fixture 240 is preferably an H-beam, L-angle, or monorail-type fixture, but is not necessarily limited thereto.

Meanwhile, in another embodiment, the charge spot 210 may be disposed on a rear wall or floor of the parking surface, which will be described below in the process of describing various embodiments of the rail mobile electric vehicle charging system.

In the case of the present invention, the connection unit 232 is connected to the power terminal 220 provided in the charge spot 210 along the fixing fixture 240, and a terminal block may be coupled to facilitate connection. For example, the two connection units 232 may be coupled along the fixing fixture 240 and connected to the power terminal on the terminal block, and then come out of the terminal block and be connected to the power terminal on the next terminal block along the fixing fixture. At this time, the power terminal 220 is preferably disposed vertically to facilitate connection with the input port of the electric vehicle charger, but is not necessarily limited thereto, and may be arranged horizontally depending on a site situation.

In the present invention, the fixing structure of the charge spot 210 is not limited to a specific structure.

The AC/DC converter 230 receives three-phase AC power and outputs DC output, which is provided to a plurality of power terminals 220. Here, the AC/DC converter 230 is preferably configured to receive three-phase AC power, but a case in which the AC power is single-phase is not excluded. In the case of the present invention, the connection unit 232 may be included to electrically connect the output of the AC/DC converter 230 and the power terminal or to electrically connect the power terminal to another power terminal adjacent to the power terminal.

In the present invention, the connection unit 232 is preferably configured as a power cable, but is not necessarily limited thereto.

The AC/DC converter 230 may be implemented to enable two-way power conversion. In addition, the AC/DC converter 230 may be connected to a centrally located charge spot among the plurality of charge spots in order to minimize conduction loss when the plurality of charge spots are connected to each other.

Meanwhile, in the rail mobile electric vehicle charging system according to the present invention, the charge spots and the electric vehicle chargers may increase as the number of electric vehicles increases. For example, it is desirable to provide at least 50 charge spots 210 in order to reduce the cost burden of installing the rail and moving unit 250, but it is not necessarily limited thereto.

At this time, if the capacity of the AC/DC converter 230 is insufficient as the number of electric vehicle chargers increases, a separate AC/DC converter 230 may be added, an output thereof may be connected to one of the power terminals, and exchange information with the existing AC converter through communication, thereby balancing a load, and the rail mobile electric vehicle charging system may be expanded and installed. The AC/DC converter 230 may communicate with other devices through wired or wireless communication.

The moving unit 250 moves along a determined rail 242 and performs the function of moving the electric vehicle charger. The moving unit 250 is formed to move back and forth by rotation of a roller fastened to the rail 242. The rail 242 may be configured as a monorail or dual rail.

The moving unit 250 may move and mount one electric vehicle charger to a specific charge spot according to a command given to the system controller 260 from the remote server device 270.

The moving unit 250 may include an energy storage system (not shown) and may be driven using energy stored in the energy storage system. The moving unit 250 may move to a determined position and perform charging during rest periods when the moving unit 250 is not driven or when the energy storage system is discharged below a certain level. At this time, a charging unit for charging the energy storage system through a contact or non-contact method may be provided at a determined position.

In the present invention, preferably, the rail 242 may be disposed so that no physical interference occurs between the electric vehicle charger already mounted on the charge spot 210 and the moving unit for moving another electric vehicle charger.

For this reason, in the case of the present invention, when moving to one electric vehicle charge, the moving unit 250 may pass over another electric vehicle charger already connected and fixed to any one charge spot to move to another charge spot, so that all mobile electric vehicle chargers may be moved to a desired position and freely perform charging. This means that there is no need to designate a parking lot exclusively for charging electric vehicles, and there are no problems with charging electric vehicles even if electric vehicles and regular engine vehicles are parked without distinction.

Meanwhile, the moving unit 250 may include an obstacle sensor (not shown), and based on this, when an obstacle appears in a movement path, the moving unit may be stopped to avoid hitting the obstacle, and when the obstacle disappears, the moving unit may move again.

The charge spot 210 may be assigned a unique spot number, and the remote server device 270 may recognize the required charge spot 210 through the user terminal and issue a command to the system controller 260 to move the electric vehicle charger to be mounted on a corresponding charge spot and proceed with charging based on charge information obtained through the user terminal. At this time, in order to accurately recognize the charge spot with the user terminal, a display unit (not shown) may be included in the parking surface, pillar, wall, or charge spot itself. The display unit may be a barcode, QR-code, or the like.

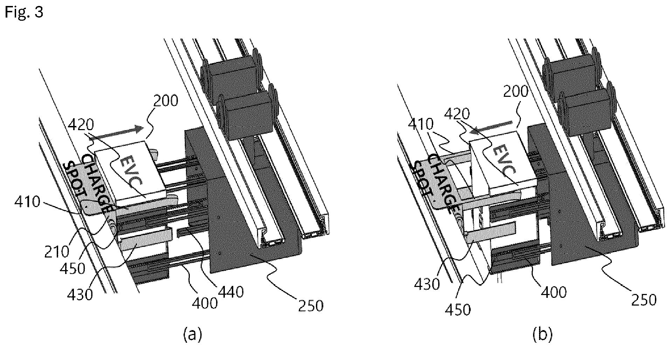

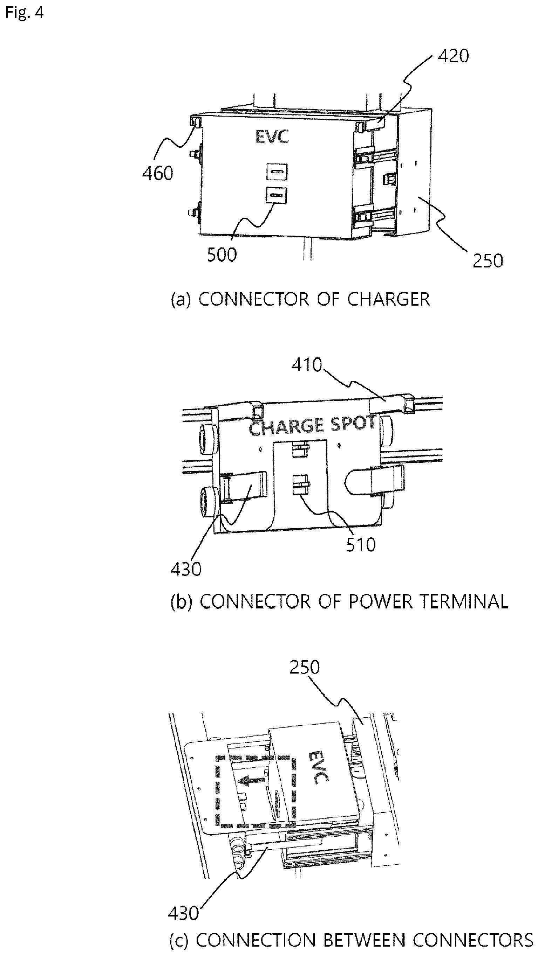

Hereinafter, the process in which the moving unit 250 according to the present invention mounts the electric vehicle charger at a predetermined charge spot and connects the power terminal and the input port will be described with reference to FIGS. 3 and 4.

First, referring to (a) of FIG. 3, a process of pulling out and separating the electric vehicle charger that is being mounted by the moving unit 250 is illustrated.

The moving unit 250 may be equipped with a robot arm 400 that mounts and separates the electric vehicle charger. Preferably, the robot arm 400 may be implemented to be able to move back and forth in a direction of placement of the charge spot in order to mount and separate the electric vehicle charger on the charge spot. In an embodiment, the robot arm may be implemented to be able to move up and down.

In addition, the moving unit 250 may be provided with a housing (not shown) to support the electric vehicle charger 200 to prevent the electric vehicle charger 200 from falling during movement.

Referring to (b) of FIG. 3, a process in which the moving unit 250 mounts an electric vehicle charger at a predetermined charge spot is illustrated. The electric vehicle charger is mounted on the charge spot so that the power terminal and the input port of the electric vehicle charger are electrically connected to each other. For example, the moving unit 250 pushes the electric vehicle charger to the arrangement position of the power terminal through the robot arm so that the electric vehicle charger may be connected to the power terminal.

In another embodiment, the robot arm 400 may be implemented to push the electric vehicle charger horizontally, lift the electric vehicle charger upwardly, or lower the electric vehicle charger to mount the electric vehicle charger on the charge spot, depending on a relative position of the charge spot.

Meanwhile, in the case of the present invention, the charge spot 210 allows the electric vehicle charger to be physically mounted on the charge spot, and a guide unit 410 may be provided to guide a mounting path therefor. The guide unit 410 may preferably be provided on a terminal block provided to correspond to the charge spot or on a fixing fixture to which the terminal block is coupled. In response to this, a mounting unit 420 may also be provided on the electric vehicle charger.

For example, the guide unit 410 may be implemented at a position corresponding to an arrangement position of the charge spot within the fixing fixture and may be implemented to protrude from both sides in an entry direction of the electric vehicle charger. In response thereto, the mounting unit 420 may be implemented to protrude from both sides of the electric vehicle charger 200 to be perpendicular to the guide unit 410. According to the structure of the guide unit 410 and the mounting unit 420, in the case of the present invention, when the electric vehicle charger 200 is pushed toward the charge spot 210 by the robot arm of the moving unit 250, the mounting unit 420 is mounted on the guide unit 410 and then pushed toward the charge sport along the guide unit 410, so that the electric vehicle charger is mounted on the charge spot. Meanwhile, a wheel 460 may be provided on the electric vehicle charger to assist the electric vehicle charger to be smoothly pushed in along the guide unit 410.

In addition, fixing unit 430 may be provided on the charge spot to fix the electric vehicle charger mounted on the charge spot. Like the guide unit 410, the fixing unit 430 is implemented to protrude from both sides of the electric vehicle charger in the entry direction and is implemented to surround the mounted electric vehicle charger when the electric vehicle charger is mounted on the charge spot. More preferably, the fixing unit 430 may be formed of an elastic member in a portion in contact with the electric vehicle charger. For example, when the electric vehicle charger comes into contact with the fixing unit 430, the fixing unit 430 opens by elasticity and shrinks to surround the electric vehicle charger to fix the electric vehicle charger. This has the additional effect of ensuring that the connection between the power terminal on the charge spot and the input port of the electric vehicle charger is firmly maintained. Similarly, the fixing unit 430 may also be implemented on a terminal block provided to correspond to the charge spot or on a fixing fixture to which the terminal block is coupled.

Meanwhile, according to the mounting structure of the power terminal and the electric vehicle charger, the moving unit 250 may include a release unit 440 for releasing the fixing unit 430 fastened to the electric vehicle charger first when the electric vehicle charger mounted on the charge spot is separated. For example, like the robot arm, the release unit 440 may be implemented to be able to move back and forth in the direction of placement of the charge spot and have an end formed to be inclined to correspond to the end of the fixing unit 430, so that the release unit 440 may preferentially come into contact with the fixing unit 430 to open the fixing unit 430 to release the fixing unit 430 when the electric vehicle charger is separated.

In another embodiment, the guide unit, the fixing unit, and the release unit as described above may be provided on an electric vehicle charger.

In addition, the moving unit 250 may include a latch unit 450 in the robot arm 400 to assist the robot arm to more efficiently pull and separate the electric vehicle charger when separating the electric vehicle charger mounted on the charge spot. For example, the latch unit 450 may preferably be in the shape of a pin and may be implemented to protrude and fasten to the electric vehicle charger from the side of the robot arm 400. In response thereto, a latch hole may also be formed in the electric vehicle charger.

In the present invention, the input port of the electric vehicle charger and the power terminal on the charge spot may be electrically connected to each other through a connector contact method. For example, the input port of the electric vehicle charger and the power terminal may be electrically connected to each other through an elastic contact unit or a gravitational force due to the weight of the electric vehicle charger.

FIG. 4 is a diagram illustrating a connection method between the input terminal and power terminal of an electric vehicle charger according to a connector contact method.

(a) of FIG. 4 shows a female connector 500 provided on the input port of the electric vehicle charger, (b) of FIG. 4 shows a male connector 510 provided on the power terminal, and (c) of FIG. 4 shows coupling between the female connector 500 and the male connector 510 of (b) of FIG. 4 by the operation of the robot arm of the moving unit of (a) of FIG. 4.

In the present invention, the connection method between the input port of the electric vehicle charger and the power terminal is not limited to a specific method.

The system controller 260 performs the function of controlling the entire system. The system controller 260 may exchange information with the AC/DC converter 230, a plurality of electric vehicle chargers, and the remote server device 270 through wired or wireless communication.

The remote server device 270 may be connected to the user terminal through communication, receive a charge request through the user terminal, issue a charge command to the system controller 260, and perform the function of monitoring a charge status.

The remote server device 270 may recognize a charge spot requiring charging through the user terminal and issue a command to the system controller 260 to move and mount the electric vehicle charger to the charge spot and perform charging based on charging information obtained through the user terminal.

For example, when receiving a request to select a charge spot corresponding to a specific position from the user terminal, the remote server device 270 determines at least one of the presence or absence of a spare electric vehicle charger and a current operating status of an electric vehicle charger previously connected to the charge spot, and select one electric vehicle charger for charging. At this time, the request for selection of a specific charge spot may be a unique spot number previously assigned in relation to the charge spot.

If a request to move to another charge spot is not received for a certain period of time in relation to a fully charged electric vehicle charger, the remote server device 270 may move the electric vehicle charger to a preset storage spot and store it as a spare electric vehicle charger.

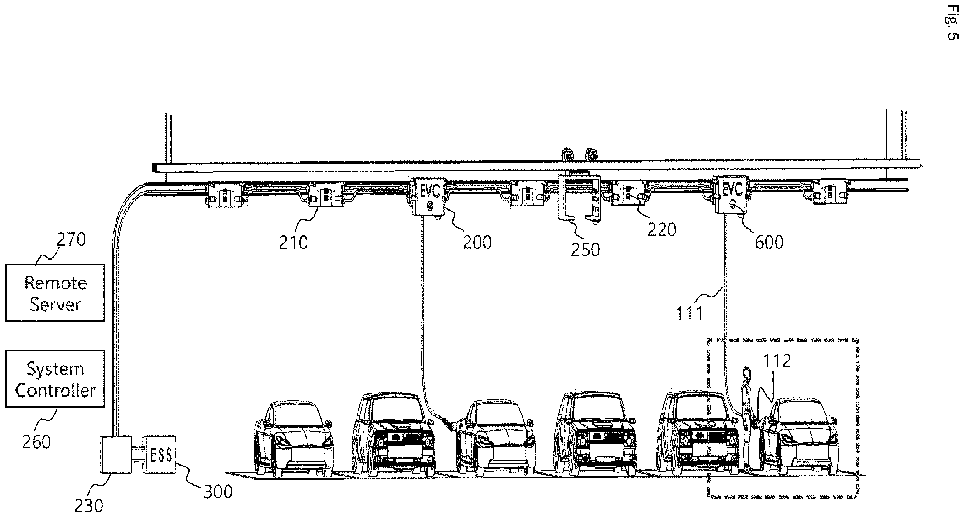

Referring to FIG. 5, the remote server device 270 may display the current charge status of the electric vehicle for which charging has been completed through a separate status display 600. For example, in the case of the present invention, the status display 600 may be provided on the electric vehicle charger to display the charge status of the electric vehicle charger, and the user may check the charge status of the electric vehicle currently being charged through the electric vehicle charger. In the present invention, it is illustrated that the display device of the electric vehicle charger changes from red to green when charging of the electric vehicle is completed, but it is not necessarily limited thereto.

Meanwhile, in the case of the present invention, as described above, even if the electric vehicle charger is already connected and fixed to one charge spot, the moving unit may pass over the electric vehicle charter to move to another charge spot, so there are no restrictions in using a plurality of mobile charges.

In this regard, referring to FIG. 5, in the present invention, in a case there is no extra electric vehicle charger remaining while a charge request is received from a specific charge spot through the user terminal and there is an electric vehicle which has been completely charged but into which a charge gun is plugged, the remote server device informs the user terminal of the position of the charger, and when a charge requestor separates the charge gun from the electric vehicle, the remote server device may move the separated electric vehicle charger to the specific charge spot through the moving unit to perform charging. This means that there is no need to move the fully charged electric vehicle to another space. Therefore, if an electric vehicle is parked without needing a separate dedicated charging space and without being distinguished from a regular engine vehicle, the electric vehicle charger may locate the electric vehicle and charge the electric vehicle.

To this end, the remote server device 270 may provide information on the presence of a spare electric vehicle charger and a position of the currently fully charged electric vehicle charger to the user terminal of the charge requestor. Accordingly, the charge requestor may move to the position of the fully charged electric vehicle charger and separate the charge gun from the electric vehicle parked at the corresponding position, thereby allowing the fully charged electric vehicle charger to be moved to a specific charge spot.

To this end, in the present invention, when receiving the charge request through the user terminal, the remote server device 270 performs an operation of asking for consent for someone else to separate the charge gun from his/her electric vehicle after charging is completed, and may start charging only when agreed.

Meanwhile, in the case of the present invention, in order to more smoothly obtain the consent of the charge requestor for the separation of the charge gun through someone else, an incentive of a charging fee discount or charge points may be provided to the user who agrees to separation of the charge gun. Conversely, for users who do not agree to separate the charge gun, a penalty may be imposed, such as forcing them to immediately remove their electric vehicle from the parking space after charging is completed or imposing an additional fee.

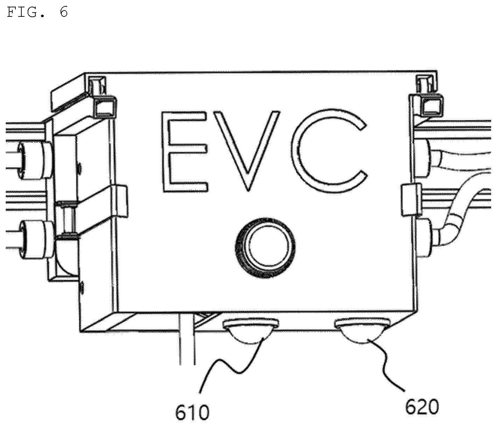

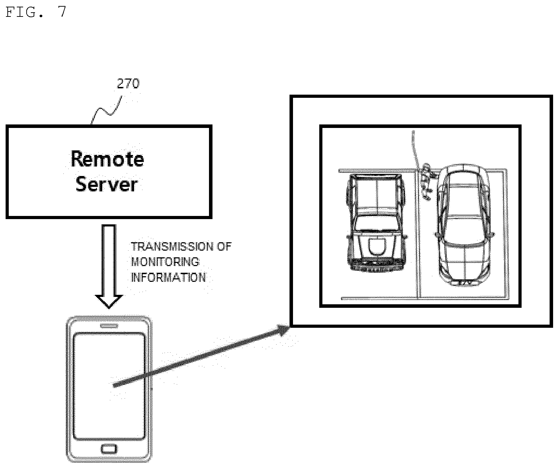

In addition, referring to FIGS. 6 and 7, the electric vehicle charger 200 may include a camera 610 for monitoring a situation during charging or when the charge gun is separated in order to determine who is responsible for an accident that may occur when the charge requestor separates the charge gun from the electric vehicle of someone else, and store monitoring information or provide the monitoring information to the user terminal of the electric vehicle through the remote server device 270.

Meanwhile, in addition to a monitoring device for monitoring, a thermal imaging camera 620 for fire detection may be additionally installed on the electric vehicle charger 200. Accordingly, in the case of the present invention, if a temperature of the electric vehicle rises above a certain value during charging, it is considered to be at risk of fire and a charging interruption or fire alarm may be sent to the remote server device through the system controller. The certain value may vary depending on data, such as electric vehicle SOC, ambient temperature, charging capacity, etc.

In addition, the electric vehicle charger 200, which does not perform charging currently, may also perform fire detection through the thermal imaging camera 620. For example, the electric vehicle charger 200 may monitor the risk of fire and accident occurrence by continuously detecting a temperature increase of the electric vehicle through the thermal imaging camera 620 even when the electric vehicle 200 performs charging or is waiting for charging.

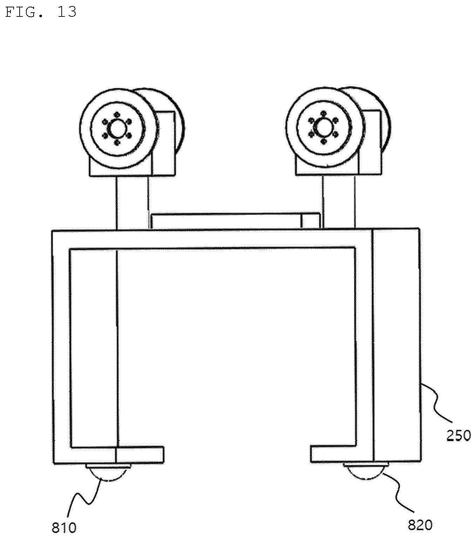

Such a thermal imaging camera may also be installed in the moving unit, and an embodiment thereof will be described below with reference to FIG. 13.

Meanwhile, gas and odor occur before the battery undergoes thermal runaway. Accordingly, in another embodiment, the electric vehicle charger 200 is provided with a detection unit for detecting odor or gas, as a fire detection unit, and may monitor the risk of fire and accident occurrence based thereon.

When charging of the electric vehicle is completed, the remote server device 270 receives electricity usage information of the electric vehicle from the electric vehicle charger corresponding to the electric vehicle, generates billing information according to time, and sends the billing information to the user terminal corresponding to the electric vehicle together with a charge completion signal.

When time setting information related to electric vehicle charge time is input from the user terminal, the remote server device 270 may adjust charge power and charge priority information for all electric vehicles currently being charged including the electric vehicle corresponding to the user terminal based on the input time setting information.

Meanwhile, in the present invention, the electric vehicle charger may be a bidirectional charger that not only charges but also discharges. In this case, the remote server device 270 may receive information on an electric vehicle charge time and whether discharge is allowed for each electric vehicle from the user terminal, and when there is not much spare power, the remote server device 270 may discharge the electric vehicle with a lot of charge time to charge another urgent electric vehicle, and may control the electric vehicle, which was discharged, to be charged again when there is a lot of power available.

The remote server device 270 may provide incentives, such as charge fee discounts or charge points for electric vehicles that allow discharge.

Meanwhile, the rail mobile electric vehicle charging system according to the present invention may be variously modified in design according to a situation of the charging station. Hereinafter, the structure of the rail mobile electric vehicle charging system according to another embodiment of the present invention will be described.

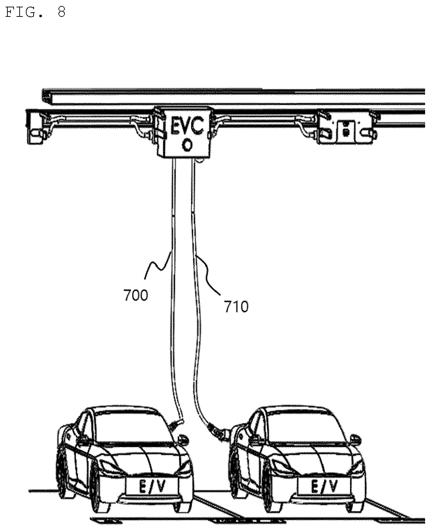

First, FIG. 8 is a diagram illustrating a charging method using a plurality of reel-type charge cables according to another embodiment of the present invention.

Referring to FIG. 8, in the present invention, a plurality of reel-type charge cables 700 and 710 may be installed on the electric vehicle charger to enable charging of two electric vehicles at one spot. For example, each reel-type charge cable may preferably be implemented to exclusively charge vehicles parked adjacent to each other based on the power terminal on which the electric vehicle charger is mounted.

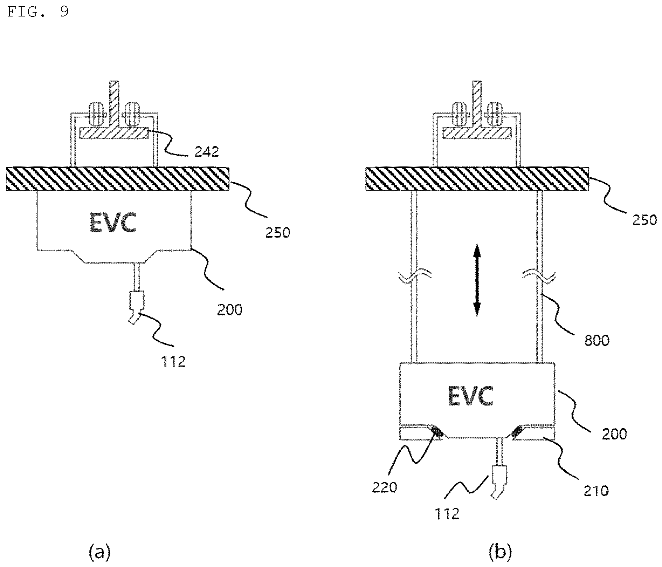

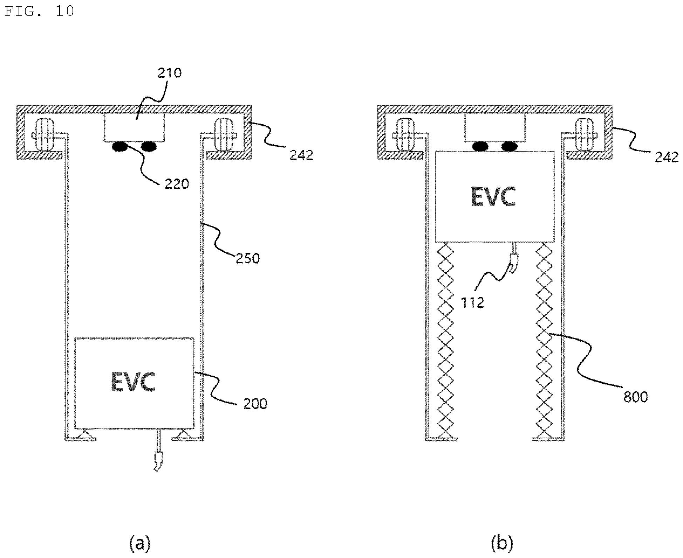

FIGS. 9 and 10 are diagrams illustrating a method of mounting an electric vehicle charger to a power terminal according to another embodiment of the present invention.

In another embodiment of the present invention, the moving unit 250 may be implemented to lift or lower the electric vehicle charger through a lifting unit and mount the electric vehicle charger on the charge spot. To this end, the rail 242 may be disposed to be spaced apart from a lower portion or an upper portion of the charge spot by a predetermined distance.

In detail, referring to (a) and (b) of FIG. 9, the moving unit 250 may lower the electric vehicle charger moved to the arrangement position of the charge spot downwardly through the lifting unit 800 to mount the electric vehicle charger on the charge spot.

Conversely, referring to (a) and (b) of FIG. 10, the moving unit 250 may lift the electric vehicle charger moved to the arrangement position of the charge spot upwardly through the lifting unit 800 to mount the electric vehicle charger on the charge spot 210.

This may be appropriately applied depending on the arrangement position of the rail that provides a movement path of the moving unit.

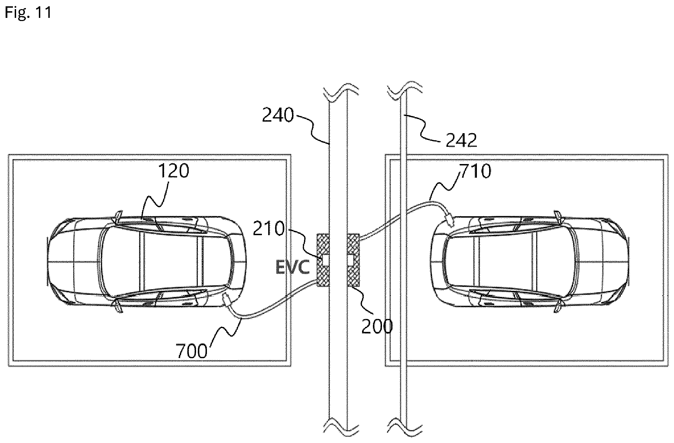

FIG. 11 is a diagram illustrating a method of operating a rail mobile electric vehicle charging system according to an arrangement form of the power terminal according to another embodiment of the present invention.

Referring to FIG. 11, in the rail mobile electric vehicle charging system according to another embodiment of the present invention, in a two-row parking lot structure in which electric vehicles are parked to face each other, the charge spot is located in an upper space between the parking surfaces of the two vehicles facing each other, so that two electric vehicles on both sides may be charged in one charge spot. This has the advantage of reducing restrictions on parking space compared to a parking structure in which electric vehicles are parked next to each other, and thus, a plurality of electric vehicles may be charged more efficiently.

Meanwhile, in this case, a plurality of reel-type charge cables may be installed on the electric vehicle charger to enable charging of two electric vehicles at one spot, and each reel-type output cable may be implemented to be dedicated to charging vehicles symmetrical to each other.

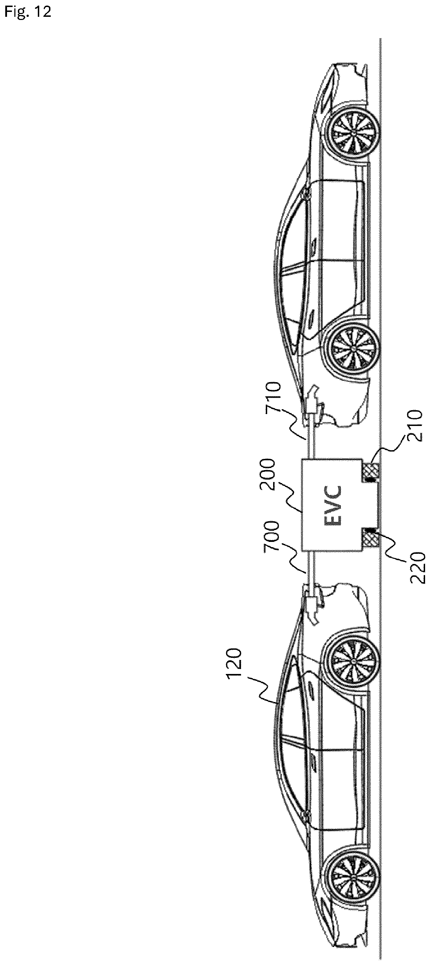

FIG. 12 is a diagram illustrating a method of operating a rail mobile electric vehicle charging system according to an arrangement form of power terminals according to another embodiment of the present invention.

Referring to FIG. 12, in another embodiment of the present invention, the rail mobile electric vehicle charging system may be implemented such that the charge spot is disposed on the floor of the parking station rather than the ceiling. The arrangement form of the charge spot may be applied not only to a parking structure in which electric vehicles are parked next to each other, but also to a parking structure in which electric vehicles are parked to face each other.

In another embodiment, the charge spot may be disposed on the rear wall of the parking surface.

This arrangement form of the charge spot has the advantage of allowing the electric vehicle charger to be mounted more safely on the power terminal compared to a structure in which the power terminal is disposed on the ceiling.

Similarly, in this case, a moving unit (not shown) may be provided to move the electric vehicle charger, and the moving unit may be implemented to pass over the electric vehicle charger already mounted on any one charge spot to move to another charge spot.

FIG. 13 is a diagram illustrating a method of monitoring a fire in a rail mobile electric vehicle charging system according to the present invention.

Referring to FIG. 13, the rail mobile electric vehicle charging system according to the present invention may perform fire monitoring by a thermal imaging camera provided on the moving unit.

More specifically, the moving unit 250 includes a thermal imaging camera 810, and when there is no operation of moving the electric vehicle charger, the moving unit 250 may monitor whether a fire occurs due to an increase in the temperature of the electric vehicle being charged as well as the electric vehicle that is simply parked, while moving along the rail.

If a fire occurs or is expected to occur, the moving unit 250 may immediately stop charging and send a fire alarm to the remote server device 270 through the system controller 260.

The moving unit 250 may be implemented to include the camera 820 and may perform a monitoring function through the camera 820, like the electric vehicle charger 200.

Similarly, in another embodiment, the moving unit 250 may be provided with a detection unit for detecting odor or gas, as a fire detection unit, and may monitor the risk of fire and accident occurrence based thereon.

Meanwhile, as described above with reference to FIG. 6, the electric vehicle charger 200 may also be implemented to include a thermal imaging camera 620. Accordingly, in another embodiment, the electric vehicle charger 200 may monitor a temperature rise of the electric vehicle being charged while charging using the electric vehicle charger, and when a fire occurs or is expected to occur, the electric vehicle charger 200 may immediately stop charging and send fire information to the remote server device 270 through the system controller 260.

Meanwhile, when the remote server device 270 receives fire information through the system controller 260, the remote server device 270 may perform one of an operation of reporting the fire to a nearby fire station, an operation of immediately providing a fire announcement within a building, or sending a fire alarm text message to all user terminals within a 3km radius.

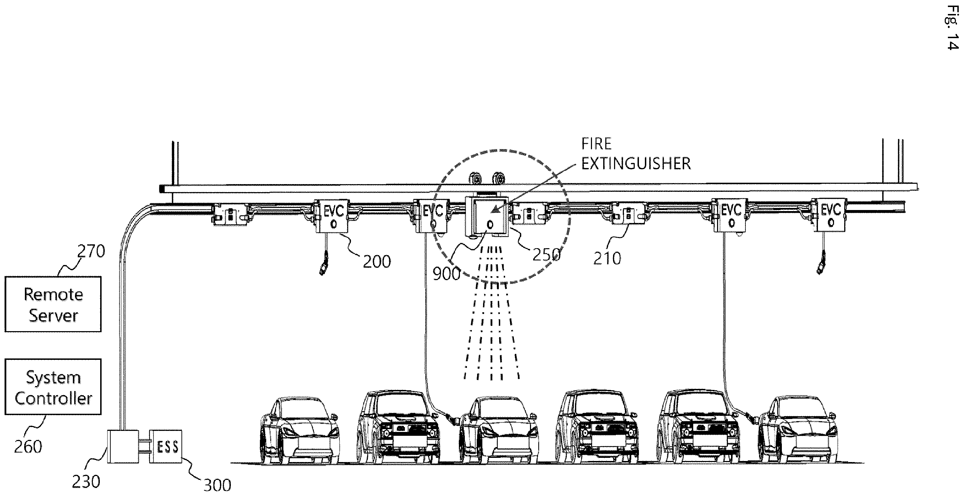

FIG. 14 is a diagram illustrating a fire extinguishing method in a rail mobile electric vehicle charging system according to the present invention.

Referring to FIG. 14, when a fire occurs in an electric vehicle, the moving unit 250 may pick up a fire extinguisher 900 and spray a fire extinguishing liquid on the electric vehicle in which the fire occurs to extinguish the fire.

In the present invention, the rail mobile electric vehicle charging system may provide a fire extinguisher containing a fire extinguishing liquid in a separate space. At this time, the separate space may be, for example, an arbitrary storage spot in which the spare electric vehicle charger 200 is stored, and this storage spot is preferably implemented on the fixing fixture so that the moving unit 250 may pick up a fire extinguisher in storage and move the fire extinguisher to the position of the fire.

In another embodiment, the rail mobile electric vehicle charging system may include a fire extinguishing cover having a function of being automatically unfolded in a separate space. In this case, when a fire occurs in an electric vehicle, the moving unit 250 may pick up the fire extinguishing cover and spread the fire extinguishing cover over the electric vehicle on fire so that the fire extinguishing cover covers the electric vehicle on fire to extinguish the fire.

Meanwhile, the fire extinguishing cover includes a driving unit, and through this, when a fire occurs, the fire extinguishing cover may automatically move to the electric vehicle in which the fire occurred and may be spread to cover the electric vehicle in the fire so that the fire may be extinguished.

In the present invention, the rail mobile electric vehicle charging system may include a backup moving unit to replace the moving unit 250 when the moving unit 250 is abnormal. This backup moving unit may be normally stored in a separate storage section, and when a problem occurs in the existing moving unit 250, the backup moving unit may replace the moving unit 250 to replace the function of the existing moving unit 250.

For example, in the case of the present invention, a bypass rail may be formed to branch out from the rail 242 on which the moving unit 250 moves and then join the rail 242 again, and a line switch that changes lines so that the moving unit 250 may selectively operate in the rail 242 and the bypass rail may be provided. Here, the line switch may be controlled by the system controller 260 according to commands from the remote server device 270.

The moving unit 250 in which an abnormality occurs may be moved to and stored on the bypass rail. Preferably, the backup moving unit may also be stored on the bypass rail under normal circumstances, and when the moving unit 250 is abnormal, the backup moving unit may be moved out of the bypass rail and moved to a main rail. Meanwhile, the moving unit 250, which is abnormal, may be moved to the bypass rail as soon as the abnormality is detected, and if the moving unit 250 cannot be driven, the moving unit 250 may be moved to the bypass rail through the backup moving unit or other auxiliary unit.

In an embodiment, a contact charger or a non-contact wireless charger may be installed on the bypass rail at regular intervals, and through the charger, the backup moving unit may be charged, and when the moving unit 250 which has been discharged below a certain level comes in, charging may also be performed on the moving unit 250.

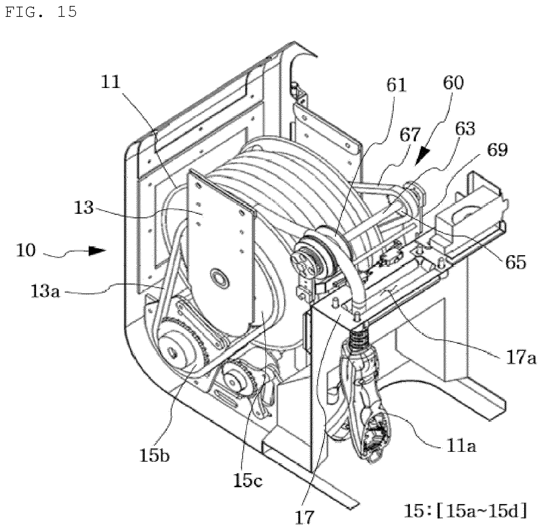

FIG. 15 is a diagram illustrating an internal structure of an electric vehicle charger for reel winding driving. Meanwhile, FIG. 15 shows an internal structure of a charger applied to a smart moving electric vehicle charging device (10-2020-0015940) of the related art.

Referring to FIG. 15, the charger 10 includes a charge cable 11, a winding reel 13 around which the charge cable 11 is wound, and a first driving unit 15 for driving the winding reel 13, and a charge module (not shown) is built in the charger 10.

First, the charger 10 is configured in the form of a hexahedral box, and includes a reel bracket on which the winding reel 13 is mounted therein, and a guide member 17 including a guide hole 17a to allow an operation of the charge cable 11 aligned by a cable aligning unit 60 when the charge cable 11 is pulled in and out is provided.

Next, the charge cable 11 is wound around the winding reel 13, and the winding reel 13 may be configured to be rotatable in the reel bracket as described above and rotate to be driven in both directions by the first driving unit 15 so that the charge cable 11 may be wound around the winding reel 13 or may be unwound therefrom.

In this case, the first driving unit 15 for driving the winding reel 13 is disposed inside the charger 10 and is provided with a first driving motor 15a having a driving gear portion 15b connected to a driving shaft. In addition, the first driving unit 15 is provided at both ends of the winding reel 13 and is provided with a driven gear portion 15c connected to the driving gear portion 15b and a first driving belt 15d.

That is, when the first driving motor 15a of the first driving unit 15 is driven, an interlocking gear portion 65 connected to the first driving belt 15d by the driving gear portion 15b may rotate, and at the same time, the winding reel 13 rotates so that the charge cable 11 may be unwound or wound and pulled in and out of the winding reel 13.

Although various embodiments of the present invention have been described using specific terms, the specification and drawings are to be regarded in an illustrative rather than a restrictive sense in order to help understand the present invention. It is obvious to those skilled in the art that various modifications and changes can be made thereto without departing from the broader spirit and scope of the invention.

### [Description of Reference Numerals]

| | | | |
|---|---|---|---|
| 13: | winding reel | 15: | first driving unit |
| 17: | guide member | 60: | cable aligning unit |
| 61: | guide roller | 63: | guide screw |
| 65: | linkage gear portion | 67: | third driving belt |
| 69: | bracket | | |
| 100, 242: | rail | 110: | electric vehicle charger of related art |
| 11, 111, 700, 710: | reel-type charge cable | 112: | charge gun |
| 120: | electric vehicle | | |
| 10, 200: | electric vehicle charger | 210: | charge spot |
| 220: | power terminal | 230: | AC/DC converter |
| 232: | connection unit | 240: | fixing fixture |
| 250: | moving unit | 260: | system controller |
| 270: | remote server device | | |
| 300: | energy storage system | | |
| 400: | robot arm | 410: | guide unit |
| 420: | mounting unit | 430: | fixing unit |
| 440: | release unit | 450: | latch unit |
| 460: | wheel | | |
| 500: | female connector | 510: | male connector |
| 600: | status display | 610, 820: | camera |
| 800: | lifting unit | 620, 810: | thermal imaging camera |
| 900: | fire extinguisher | | |

## Claims

1. A rail mobile electric vehicle charging system comprising:
an AC/DC converter receiving AC power and generating DC power;
an electric vehicle charger including an electric vehicle charge module receiving the DC power and supplying current necessary for charging an electric vehicle, an input port provided at an input terminal of the electric vehicle charge module, and a charge cable and a charge gun connected to an output terminal of the electric vehicle charge module;
a plurality of predetermined charge spots in which a plurality of the electric vehicle chargers are mounted;
a power terminal provided at each charge spot and connected to the input port in a contact manner to supply the DC power;
a connection unit connecting the AC/DC converter and the power terminal or to another power terminal adjacent to the power terminal;
a moving unit moving along a predetermined rail, moving the electric vehicle charger to one of the charge spots, and mounting the electric vehicle charger so that the input terminal of the electric vehicle charger and the power terminal are connected to each other;
a system controller controlling the entire system; and
a remote server device receiving a charge request through a user terminal, issuing a charge command to the system controller, and monitoring a charge status through the system controller.

2. The rail mobile electric vehicle charging system of claim 1, wherein the charge cable is a reel-type charge cable configured to be automatically lowered when charging start information is received from a user terminal and to be automatically raised when the charge gun is pulled out after charging is completed.

3. The rail mobile electric vehicle charging system of claim 1, wherein the rail is disposed to be spaced apart from the charge spot by a predetermined distance to prevent physical interference between the electric vehicle charger already mounted on the charge spot and the moving unit for moving another electric vehicle charger.

4. The rail mobile electric vehicle charging system of claim 1, wherein the output terminal of the AC/DC converter is connected to a centrally located charge spot among the plurality of charge spots in order to minimize conduction loss of the connection unit when the plurality of charge spots are connected to each other.

5. The rail mobile electric vehicle charging system of claim 1, wherein, when a capacity of the AC/DC converter is insufficient as the number of electric vehicle chargers increases, a separate AC/DC converter is added, an output thereof is connected to one of the power terminals, and exchanges information with an existing AC/DC converter through communication to control an output.

6. The rail mobile electric vehicle charging system of claim 5, wherein the plurality of charge spots are arranged on a rear wall or floor of the parking surface.

7. The rail mobile electric vehicle charging system of claim 1, wherein the plurality of charge spots include a display unit recognizable by a user terminal on a parking surface, a pillar, a wall, or the charge spot itself.

8. The rail mobile electric vehicle charging system of claim 1, wherein the moving unit includes a robot arm mounting and separating the electric vehicle charger.

9. The rail mobile electric vehicle charging system of claim 1, wherein the charge spot or the electric vehicle charger includes a guide unit guiding a mounting path of the electric vehicle charger mounted on the charge spot and a fixing unit fixing the mounted electric vehicle charger.

10. The rail mobile electric vehicle charging system of claim 9, wherein the moving unit or the electric vehicle charger includes a release unit releasing the fixing unit when separating the electric vehicle charger mounted on the charge spot.

11. The rail mobile electric vehicle charging system of claim 1, wherein the moving unit includes an obstacle sensor which stops the moving unit to avoid hitting an obstacle when the obstacle appears in a movement path and moves again when the obstacle disappears.

12. The rail mobile electric vehicle charging system of claim 1, wherein the plurality of electric vehicle chargers have different capacities in a plurality of stages to allow a charging user to select an electric vehicle charger having a required capacity.

13. The rail mobile electric vehicle charging system of claim 1, wherein the system controller exchanges information with the AC/DC converter, the plurality of electric vehicle chargers, and a remote server device through wired or wireless communication.

14. The rail mobile electric vehicle charging system of claim 1, wherein the remote server device is connected to the user terminal through communication, recognizes a charge spot requiring charging through the user terminal, issues a command to the system controller to move the electric vehicle charger to be mounted on the charge spot, and perform charging based on charging information obtained through the user terminal.

15. The rail mobile electric vehicle charging system of claim 1, wherein, when receiving the charge request through the user terminal, the remote server device performs an operation of asking for consent for someone else to separate the charge gun from his/her electric vehicle after charging is completed, and starts charging only when agreed.

16. The rail mobile electric vehicle charging system of claim 1, wherein, in a case there is no extra electric vehicle charger remaining while a charge request is received from a specific charge spot through the user terminal and there is an electric vehicle charger which has completely charged the electric vehicle but into which a charge gun is plugged, the remote server device informs the user terminal of a position of the charger, and when a charge requestor separates the charge gun from the electric vehicle, the remote server device which is separated from the moving unit moves the separated electric vehicle charger to the specific charge spot to perform charging.

17. The rail mobile electric vehicle charging system of claim 16, wherein the electric vehicle charger includes a camera for monitoring a situation during charging or when the charge gun is separated in order to determine who is responsible for an accident that occurs when the charging requestor separates the charge gun from the electric vehicle of someone else, and stores monitoring information or provides the monitoring information to the user terminal of the electric vehicle through the remote server device.

18. The rail mobile electric vehicle charging system of claim 1, wherein the electric vehicle charger or the moving unit includes a thermal imaging camera and monitors a temperature rise of the electric vehicle being charged or a completely charged and send fire information to a remote server device through the system controller when a fire occurs or is expected to occur.

19. The rail mobile electric vehicle charging system of claim 1, wherein
the rail mobile electric vehicle charging system includes a fire extinguishing cover having an automatically unfolding function and being normally stored at one end of the rail so as not to interfere with movement of the moving unit, and
when an electric vehicle fire is detected, the moving unit picks up the fire extinguishing cover and moves the fire extinguishing cover to the electric vehicle in which the fire occurred, then unfolds the fire extinguishing cover to cover the electric vehicle in the fire to extinguish the fire.

20. The rail mobile electric vehicle charging system of claim 1, wherein
the rail mobile electric vehicle charging system includes a fire extinguishing cover which is usually stored at one end of the rail so as not to interfere with the movement of the moving unit, and
the fire extinguishing cover includes a driving unit and, and when a fire occurs, the fire extinguishing cover moves to the electric vehicle in which the fire occurred and automatically unfolds to cover the electric vehicle in which the fire occurred, to extinguish the fire.
